# EUROPÄISCHE PATENTANMELDUNG

(11) **EP 0 572 069 A1**
(43) Veröffentlichungstag der Anmeldung: **01.12.1993**
(21) Anmeldenummer: 93201433.5
(22) Anmeldetag: 19.05.1993
(51) Int. Cl.: A47J 37/07, A47J 33/00

(54) **Zusammenklappbare Vorrichtung zum Grillieren**

(30) Priorität: 26.05.1992 CH 1699/92
(71) Anmelder: MOHA MODERNE HAUSHALTWAREN AG, CH-3052 Zollikofen (CH)
(72) Erfinder: Michel, Walter, CH-3052 Zollikofen (CH)
(74) Vertreter: Kerr, Andrew

(57) **Zusammenfassung**

Die Erfindung betrifft eine zusammenklappbare Vorrichtung (1) zum Grillieren von Fleischstücken und dergl., vorzugsweise über einer offenen Feuerstelle. Sie besteht aus einem Ständer (2) vorzugsweise in Form eines Erdspiesses, einem fest mit dem Ständer verbundenen Kranzstück (4) mit gleichmässig über seinen Umfang verteilten Ausnehmungen (12), in den Ausnehmungen schwenkbar angebrachte und in radialer Richtung speichenartig spreizbaren Stäben (3) und einer verschiebbar am Ständer angebrachten Arretiervorrichtung (5) zum Feststellen der Stäbe in ihrer gespreizten Stellung.

## Beschreibung

Die Erfindung betrifft eine zusammenklappbare Vorrichtung zum Grillieren von Fleischstücken und dergl., vorzugsweise über einer offenen Feuerstelle.

Die erfindungsgemässe, kleine und handliche Vorrichtung zum Grillieren lässt sich gut beim Wandern, auf Fahrradtouren, Motorradtouren, beim Camping oder sonstigen Ausflügen mitführen, sie passt ideal in jeden Rucksack und jede Fahrradtasche. Die Vorrichtung zum Grillieren bietet Platz für ca. vier Koteletten, Würste, Maiskolben, etc. Die erfindungsgemässe Vorrichtung zum Grillieren ist komplett auf einfachste Weise zusammenklappbar und leicht zu reinigen. Die Vorrichtung zum Grillieren ist sofort verwendungsbereit, sie muss nur aufgeklappt und in die Erde gesteckt werden.

Die erfindungsgemässe, zusammenklappbare Vorrichtung zum Grillieren von Fleischstücken und dergl., vorzugsweise über einer offenen Feuerstelle, besteht aus einem Ständer vorzugsweise in Form eines Erdspiesses, einem fest mit dem Ständer verbundenen Kranzstück mit gleichmässig über seinen Umfang verteilten Ausnehmungen, in den Ausnehmungen schwenkbar angebrachte und in radialer Richtung speichenartig spreizbaren Stäben und einer verschiebbar am Ständer angebrachten Arretiervorrichtung zum Feststellen der Stäbe in ihrer gespreizten Stellung.

Bevorzugt verläuft der Ständer an einem Ende in einen Spitz, damit er besser in die Erde gesteckt werden kann. Der Ständer besitzt eine bevorzugte Länge von 22 cm, aber er kann natürlich auch länger oder kürzer sein. Der bevorzugte Aussendurchmesser des Ständers beträgt 12 mm, der bevorzugte Innendurchmesser 10 mm, die Erfindung deckt aber auch dickere oder dünnere Ständer, mit dickeren oder dünneren Wänden.
Vor Inbetriebnahme des bevorzugten Ausführungsbeispiels der Vorrichtung zum Grillieren sind drei Handgriffe notwendig: a) Zurückschieben einer Arretiervorrichtung, b) Umdrehen der Vorrichtung zum Grillieren, so dass die Stäbe, die die Auflagefläche für das Grillgut bilden selbstständig auseinander fallen, c) Arretiervorrichtung in Fixierstellung schieben und die Vorrichtung zum Grillieren um 90° drehen. Die Vorrichtung zum Grillieren hat keine verlierbaren Einzelteile. Es gibt folglich kein Zusammenstecken oder Zusammenschrauben vor der Inbetriebnahme. Die Vorrichtung ist an einem Stück. Die beweglichen Teile sind klappbar oder verschiebbar verbunden.

Vorzugsweise wird die Vorrichtung zum Grillieren aus Stahl hergestellt, sie kann aber auch aus anderen Metallen oder Legierungen hergestellt werden. Insbesondere das Kranzstück kann aus Aluminium hergestellt werden. Die Arretiervorrichtung wird bevorzugt aus einer Aluminiumlegierung hergestellt.

Die Anzahl der in radialer Richtung speichenartig spreizbaren Stäbe sollte so gross sein, dass die Zwischenräume zwischen den Stäben nicht zu gross sind, damit die Fleischstücke, etc. nicht herunterfallen. Es können auch Verbindungsstücke zwischen den Stäben angebracht werden, damit die Gefahr des Herunterfallens gemindert wird. Die Zwischenstücke können aus einzelnen Verbindungsdrähten aber auch aus Metallnetzen bestehen.

Die in radialer Richtung speichenartig spreizbaren Stäbe können gerade sein oder alternativ am äusseren Ende aufgebogen, so dass die aufgeklappte Vorrichtung zum Grillieren wie ein Teller mit Rand ist. Die Stäbe können einen kreisförmigen, ovalen, quadratischen, rechteckigen, etc. Querschnitt besitzen, bevorzugt wird ein kreisförmiger Querschnitt. Die Stäbe können verschiedene beliebige Längen aufweisen, bevorzugt jedoch eine Länge von 10 bis 20 cm, noch bevorzugter eine Länge von etwa 15 cm. Der bevorzugte Aussendurchmesser der Stäbe beträgt 5 mm, der bevorzugte Innendurchmesser 3 mm, die Erfindung deckt aber auch dickere oder dünnere Stäbe, mit dickeren oder dünneren Wänden.

Die Arretiervorrichtung ist bevorzugt eine Stellhülse, die die in radialer Richtung speichenartig spreizbaren Stäbe in der aufgeklappten Form einklemmt, es können aber auch andere Möglichkeiten benützt werden, um die Speichen aufzuspannen, beispielsweise eine Hülsenmutter, auch ein Mechanismus wie er beim Aufspannen eines Schirmes verwendet wird, wäre denkbar.
Im folgenden wird anhand der Zeichnungen ein bevorzugtes Ausführungsbeispiel der Erfindung beschrieben. Es zeigen
- Fig. 1: eine Aufsicht auf eine zusammengeklappte Vorrichtung zum Grillieren
- Fig. 2: eine Aufsicht auf eine aufgeklappte Vorrichtung zum Grillieren
- Fig. 3: ein Schnitt durch Arretiervorrichtung und Kranzstück einer aufgeklappten Vorrichtung zum Grillieren

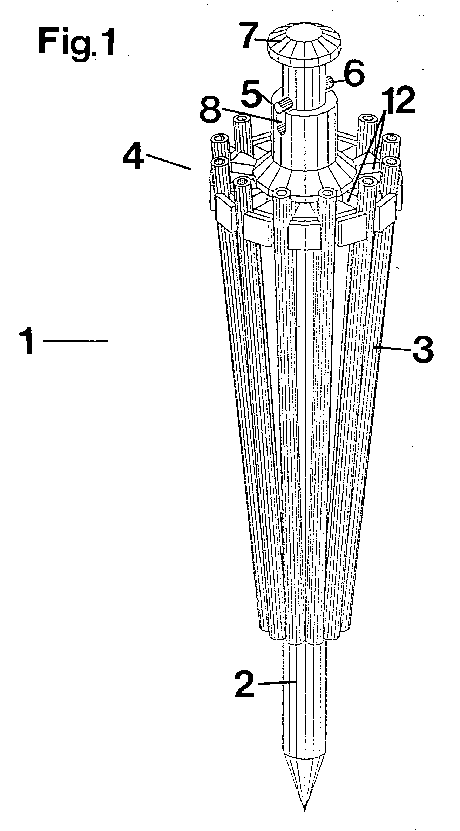

Fig. 1 zeigt eine Ausführungsform der erfindungsgemässen Vorrichtung zum Grillieren in der zusammengeklappten Form, die im wesentlichen aus einem Ständer (2), Stäben (3), einem Kranzstück (4) und einer Arretiervorrichtung (5) besteht. Oben am Ständer (2) ist ein Halteknopf (7) angebracht. Die Stäbe (3), die mittels einem Spannring schwenkbar in Ausnehmungen (12) des Kranzstücks (4) befestigt sind, sind heruntergeklappt, so dass die Vorrichtung zum Grillieren (1) die Form eines Kegels hat.
Die erfindungsgemässe Vorrichtung zum Grillieren ist etwa 25 cm lang, hat im zusammengeklappten Zustand einen Durchmesser von etwa 5 cm und wiegt etwa 450 g.

Die Arretiervorrichtung (5), eine Stellhülse, weist zwei Schlitze (8) an gegenüberliegenden Seiten der Stellhülse (5) auf, in welche die Stifte (6) passen, welche mit dem Ständer (2) fest verbunden sind. Um die Vorrichtung zum Grillieren (1) aufzuklappen, wird die Stellhülse (5) zum Halteknopf (7) hin verschoben. Dies funktioniert nur wenn Schlitze (8) und die Stifte (6) die gleiche Position haben und die Schlitze (8) den Stiften (6) entlanggleiten. Dann wird die Vorrichtung zum Grillieren (1) auf den Kopf gestellt, so dass der Halteknopf (7) zum Boden zeigt und die Stäbe (3) nach unten fallen und radial ausgerichtet sind. In dieser Stellung wird die Stellhülse (5) vom Halteknopf (7) weg in die Ausgangsposition zurückgeschoben und durch Drehen der Stellhülse (5) werden die Stäbe in der aufgeklappten Form fixiert.

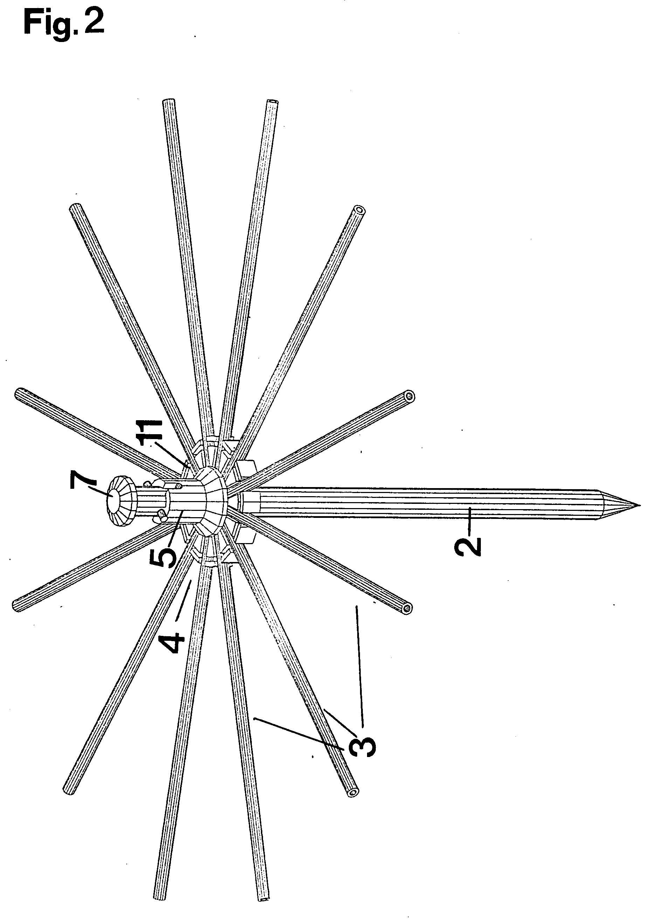

Fig. 2 zeigt die Vorrichtung zum Grillieren in der aufgeklappten Form. In der Nute (11) verläuft ein Spannring, an dem die in radialer Richtung speichenartig spreizbaren Stäbe (3) schwenkbar befestigt sind.

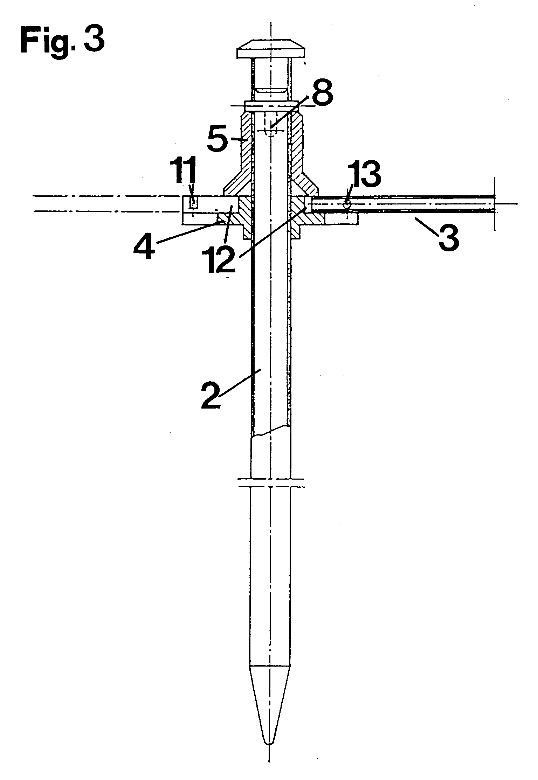

Fig. 3 zeigt einen Schnitt durch eine Arretiervorrichtung (5) und ein Kranzstück (4) einer aufgeklappten Vorrichtung zum Grillieren. Die Stellhülse (5) mit Schlitzen (8) dieser Ausführungsform besteht aus AlMg2,7Mn. Am Kranzstück (4) sind die Stäbe (3) schwenkbar mittels Spannring (13), der in der Nute (11) verläuft, angebracht. Die Stäbe (3) passen in der aufgeklappten Form genau in die Ausnehmungen (12) des Kranzstückes (4).

Die im Ausführungsbeispiel beschriebene Vorrichtung zum Grillieren kann zusammen mit einem Isoliermaterial verwendet werden, damit der Benützer sich nicht die Hände verbrennt, wenn die Vorrichtung zum Grillieren heiss ist. Besonders bevorzugt wird ein Isolierhandschuh, der auch als Hülle für die zusammengeklappte Vorrichtung zum Grillieren beim Transport oder bei der Lagerung dienen kann.

## Patentansprüche

1. Zusammenklappbare Vorrichtung zum Grillieren von Fleischstücken und dergl., vorzugsweise über einer offenen Feuerstelle, gekennzeichnet durch
- einen Ständer (2) vorzugsweise in Form eines Erdspiesses,
- ein fest mit dem Ständer verbundenes Kranzstück (4) mit gleichmässig über seinen Umfang verteilten Ausnehmungen (12),
- in den Ausnehmungen schwenkbar angebrachte und in radialer Richtung speichenartig spreizbare Stäbe (3)
- eine verschiebbar am Ständer angebrachte Arretiervorrichtung (5) zum Feststellen der Stäbe in ihrer gespreizten Stellung.

2. Zusammenklappbare Vorrichtung zum Grillieren nach Anspruch 1, dadurch gekennzeichnet, dass die Bestandteile des Grilles aus Metall sind, insbesondere Stahl, Gusseisen, Alluminium und/oder Alluminiumlegierungen.

3. Zusammenklappbare Vorrichtung zum Grillieren nach Anspruch 1 oder Anspruch 2, dadurch gekennzeichnet, dass der Ständer (2) am Ende, das in die Erde gesteckt wird, in einen Spitz verläuft.

4. Zusammenklappbare Vorrichtung zum Grillieren nach einem oder mehreren der vorangegangenen Ansprüche, dadurch gekennzeichnet, dass die speichenartig spreizbaren Stäbe (3) am Kranzstück (4) mittels einem Spannring (13) schwenkbar befestigt sind.

5. Zusammenklappbare Vorrichtung zum Grillieren nach einem oder mehreren der vorangegangenen Ansprüche, dadurch gekennzeichnet, dass die Arretiervorrichtung (5) eine Stellhülse ist.

6. Verfahren zum Aufklappen der Vorrichtung zum Grillieren, wie in einem der vorangehenden Ansprüche beansprucht, dadurch gekennzeichnet, dass zuerst die Arretiervorrichtung (5) zurückgeschoben wird, dann die Vorrichtung zum Grillieren (1) umgedreht (auf den Kopf gestellt) wird, so dass die Stäbe (3) selbstständig auseinanderfallen und dann die Arretiervorrichtung (5) in Fixierstellung geschoben wird und die Vorrichtung zum Grillieren (1) um 90° umgedreht wird, wobei die Stäbe (3) eine tellerartige Auflagefläche für das Grillgut bilden.
